(19) Europäisches Patentamt
European Patent Office
Office européen des brevets

(11) **EP 1 727 717 B1**

(12) **EUROPÄISCHE PATENTSCHRIFT**

(45) Veröffentlichungstag und Bekanntmachung des Hinweises auf die Patenterteilung:
**23.09.2015 Patentblatt 2015/39**

(51) Int Cl.:
***B60T 8/24*** *(2006.01)*     ***B60T 7/12*** *(2006.01)*
***B60T 7/10*** *(2006.01)*

(21) Anmeldenummer: **05743003.5**

(22) Anmeldetag: **23.03.2005**

(86) Internationale Anmeldenummer:
**PCT/EP2005/051329**

(87) Internationale Veröffentlichungsnummer:
**WO 2005/090134 (29.09.2005 Gazette 2005/39)**

(54) **SYSTEM ZUM UNTERSTÜTZEN EINES FAHRZEUGFÜHRERS BEI ANHALTE- UND ANFAHRVORGÄNGEN**

SYSTEM FOR VEHICLE DRIVER SUPPORT FOR STOPPING AND STARTING PROCEDURES

SYSTEME DESTINE A ASSISTER UN CONDUCTEUR DE VEHICULE LORS D'ARRETS ET DE DEMARRAGES

(84) Benannte Vertragsstaaten:
**DE FR**

(30) Priorität: **23.03.2004 DE 102004014175**

(43) Veröffentlichungstag der Anmeldung:
**06.12.2006 Patentblatt 2006/49**

(73) Patentinhaber: **Continental Teves AG & Co. oHG**
**60488 Frankfurt (DE)**

(72) Erfinder:
• **BAIJENS, Mark**
**64546 Mörfelden-Walldorf (DE)**
• **HUTH, Oliver**
**61476 Kronberg (DE)**
• **OHLY, Markus**
**35423 Lich-Eberstadt (DE)**
• **MEURERS, Thomas**
**60385 Frankfurt (DE)**
• **WISCHER, Patrick**
**65824 Schwalbach a. Ts. (DE)**

(56) Entgegenhaltungen:
WO-A-00/10854     WO-A-03/043861
DE-A1- 10 021 043     DE-A1- 19 525 552
DE-A1- 19 849 799     DE-A1- 19 931 345
US-A- 4 717 207

**Beschreibung**

Die Erfindung betrifft ein System zum Unterstützen eines Fahrzeugführers, bei dem in einem Kraftfahrzeug Assistenzfunktionen zur Unterstützung des Fahrers bei Anhalte- und Anfahrvorgängen durchgeführt werden, die in Abhängigkeit eines ersten Vergleichs zwischen wenigstens einer Fahrzustandgröße und einem Schwellenwert und/oder aufgrund von ersten Betätigungssignalen von durch den Fahrer bedienbaren Betätigungsmitteln aktiviert werden.

Zur Unterstützung eines Fahrers eines Kraftfahrzeugs bei Anfahr- und Anhaltevorgängen ist eine Vielzahl von verschiedenen elektronischen Assistenzfunktionen bekannt. Um ein Zurückrollen des Fahrzeugs während eines Anfahrvorgangs zu verhindern, werden beispielsweise Anfahrhilfen eingesetzt, bei denen während des Stillstands des Fahrzeugs ein Bremsdruck in den Radbremsen eingestellt wird, der während des Anfahrvorgangs automatisch abgebaut wird. Gebräuchliche Bezeichnungen für derartige Anfahrhilfen sind Hillholder-System oder Hill-Start-Assist-System (HSA-System). Aus der gattungsgemäßen DE 195 25 552 A1 ist ein Verfahren und eine Anordnung zum Halten eines Fahrzeugs auf geneigter Fahrbahn bekannt, bei dem unter Berücksichtigung der Fahrzeuggeschwindigkeit und der Bremspedalbetätigung oder entsprechender Kriterien Bremskraft an einzelnen oder an mehreren Fahrzeugrädern aufgebracht wird. Zusätzlich zur Sensierung der Fahrzeuggeschwindigkeit und Bremspedalbetätigung wird das Anfahrmoment ermittelt, der Betriebszustand des Fahrzeugmotors oder die Einschaltung der Zündung bestimmt, sowie das Betätigen einer (mechanischen) Fahrzeug-Feststellbremse und das Aktivieren bzw. Einschalten des Haltesystems festgestellt.

Ferner ist es beispielsweise bekannt, eine elektrische Feststellbremse des Kraftfahrzeugs automatisch zu aktivieren, wenn erkannt wird, dass das Fahrzeug geparkt wird, und die elektrische Feststellbremse zu lösen, wenn ein Anfahrwunsch des Fahrers erkannt wird.

Die bekannten Assistenzfunktionen sind jeweils als eigenständige Funktionen ausgeführt, die jeweils über eine eigene Aktivierungslogik und eine eigene Steuerung verfügen, welche die Bremsdruckanforderung berechnet. Grundsätzlich können somit mehrere derartige Assistenzsysteme zur selben Zeit aktiviert sein. Dabei kann es zu einer mehrfachen Berechnung einer Bremsdruckanforderung kommen, wodurch sich ein unnötig hoher Aufwand bei der Realisierung der Systeme ergibt.

Insbesondere da bei den verschiedenen Assistenzsystemen in der Regel unterschiedliche Bedingungen zur Erkennung von Fahrsituationen, wie beispielsweise eines Anfahrvorgangs, überprüft werden bzw. das Vorliegen von Bedingungen anhand unterschiedlicher Schwellenwerte festgestellt wird, berechnen die unterschiedlichen Assistenzsysteme zudem oftmals verschiedene Druckanforderungen. Vor allem bei einer großen Anzahl derartiger Assistenzsysteme in einem Kraftfahrzeug kann dies zu einer fehlerhaften Steuerung der Bremsanlage und damit auch zu einer Beeinträchtigung der Fahrzeugsicherheit führen.

Der Erfindung liegt daher die Aufgabe zugrunde eine zuverlässige und sichere Steuerung der Bremsanlage auch dann zu realisieren, wenn eine Vielzahl von Assistenzfunktionen zur Unterstützung des Fahrers bei Anhalte- und Anfahrvorgängen in einem Kraftfahrzeug ausgeführt werden.

Erfindungsgemäß wird diese Aufgabe durch ein System mit den Merkmalen des Patentanspruchs 1 gelöst.

Zweckmäßige Weiterbildungen der Erfindung sind in den Unteransprüchen angegeben.

Erfindungsgemäß zeichnet sich das System zum Unterstützen eines Fahrzeugführers, bei dem in einem Kraftfahrzeug Assistenzfunktionen zur Unterstützung des Fahrers bei Anhalte- und Anfahrvorgängen durchgeführt werden, die in Abhängigkeit eines ersten Vergleichs zwischen wenigstens einer Fahrzustandgröße und einem Schwellenwert und/oder aufgrund von ersten Betätigungssignalen von durch den Fahrer bedienbaren Betätigungsmitteln aktiviert werden, dadurch aus, dass eine Steuerungseinheit anhand eines weiteren Vergleichs wenigstens einer Fahrzustandsgröße mit einem vorgegebenen Schwellenwert und/oder anhand weiterer Betätigungssignale der Betätigungsmittel einen Fahrzeugzustand ermittelt, dass die Steuerungseinheit überprüft, ob wenigstens eine Assistenzfunktion aktiviert ist, und dass die Steuerungseinheit die Bremsanlage des Fahrzeugs in Abhängigkeit von dem ermittelten Fahrzeugzustand steuert, wenn wenigstens eine Assistenzfunktion aktiviert ist.

Mit Vorteil setzt die Erfindung dabei ein Steuergerät ein, welches sowohl die Erkennung der Fahrzeugzustände als auch die Steuerung der Bremsanlage des Fahrzeugs vornimmt. Die einzelnen Assistenzfunktionen bleiben im Rahmen der Erfindung erhalten, so dass der Fahrzeugführer die einzelnen Funktionen aktivieren oder deaktivieren kann, um das Maß an gewünschter Unterstützung nach seinen Bedürfnissen festzulegen.

Es wird somit ein System bereitgestellt, das über eine zentrale, d.h. eine für alle Assistenzfunktionen der beschriebenen Art gleiche Steuerungseinheit verfügt, welche die Fahrzeugzustände ermittelt und die Steuerung der Bremsanlage vornimmt. Bremseneingriffe erfolgen jedoch nur dann, wenn wenigstens eine der Assistenzfunktionen aktiviert ist.

Die Erfindung nutzt die Erkenntnis, dass den unterschiedlichen Assistenzfunktionen in einem bestimmten Fahrzeugzustand, wie beispielsweise dem Fahrzeugzustand Halten, im Wesentlichen die gleichen Bremskraftanforderungen zugrunde liegen, die bei dem erfindungsgemäßen System von der zentralen Steuerungseinheit ermittelt und in die Bremsanlage eingesteuert werden. Vor allem ermöglicht die Steuerungseinheit jedoch eine für alle Assistenzfunktionen einheitliche Ermittlung von Übergängen zwischen verschiedenen Fahrzeugzuständen, so dass bei der Durchführung der Assistenzfunktionen eine einheitliche, zuverlässige und sichere Steuerung der Bremsanlage gewährleistet ist.

Hierbei ist es vorgesehen, dass der Fahrzeugzustand in Abhängigkeit eines Vergleichs der Fahrzeuggeschwindigkeit und/oder der Fahrzeugbeschleunigung mit einem Schwellenwert bestimmt wird.

In einer vorteilhaften Ausführungsform der Erfindung wird der Fahrzeugzustand in Abhängigkeit eines Betätigungssignals eines durch den Fahrer bedienbaren Bremsbetätigungsmittels und/oder eines Antriebsmotorsteuerungsmittels ermittelt.

Die Betätigungssignale werden dabei vorzugsweise von an den Betätigungsmitteln angebrachten Sensoren erfasst.

Die Aktivierung einer Assistenzfunktion erfolgt vorzugsweise in Abhängigkeit eines Betätigungssignals eines durch den Fahrzeugführer bedienbaren Bremsenbetätigungsmittels und/oder eines Antriebsmotorsteuerungsmittels oder in Abhängigkeit eines Betätigungssignals eines durch den Fahrer bedienbaren Aktivierungsmittels.

Bei dem Aktivierungsmittel kann es sich beispielsweise um einen von dem Fahrzeugführer bedienbaren Schalter zur Aktivierung einer bestimmten Assistenzfunktion handeln. Erfindungsgemäß ist die Steuerungseinheit als Zustandsautomat ausgebildet, wobei es vorgesehen ist, dass ein Fahrzeugzustand erkannt wird, indem in einem weiteren Fahrzeugzustand überprüft wird, ob eine Übergangsbedingung für einen Zustandsübergang vorliegt, und ein Zustandsübergang erfolgt, wenn die Übergangsbedingung erfüllt ist. Das Vorliegen einer Übergangsbedingung wird dabei anhand des weiteren Vergleichs wenigstens einer Fahrzustandsgröße mit einem vorgegebenen Schwellenwert und/oder anhand der weiteren Betätigungssignale eines durch den Fahrer bedienbaren Betätigungsmittels festgestellt. Hierbei ist es vorgesehen, dass genau ein Fahrzeugzustand festgestellt wird, der aus einem der folgenden Fahrzeugzustände ausgewählt ist: Kriechen, Anhalten, Halten, Parken/Sichern, Anfahren.

In einer zweckmäßigen Ausführungsform der Erfindung ist es vorgesehen, dass die Steuerungseinheit die Bremsanlage des Fahrzugs in Abhängigkeit der aktivierten Assistenzfunktion steuert oder regelt.

Dies ist vor allem dann vorteilhaft, wenn sich bei verschiedenen in einem bestimmten Fahrzeugzustand aktivierbaren Assistenzfunktionen unterschiedliche Steuerungs-/Regelungsanforderungen ergeben würden.

Vorzugsweise umfasst das System dabei eine Arbitrierungseinheit, die ermittelt, in Abhängigkeit von welcher aktivierten Assistenzfunktion die Steuerungseinheit die Bremsanlage steuert, wenn mehrere Assistenzfunktionen in einem Fahrzeugzustand aktiviert sind.

Dies ist dann vorteilhaft, wenn in einem Fahrzeugzustand mehrere Assistenzfunktionen aktiviert sind, die unterschiedliche Steuerungs-/Regelungsanforderungen zur Folge haben.

Vorteilhaft wird im Fahrzeugzustand Anhalten die Bremskraft vergrößert, wobei die Änderungsrate der Bremskraft in Abhängigkeit von der aktivierten und/oder der durch die Arbitrierungseinheit ermittelten Assistenzfunktion bestimmt wird.

Dabei ist es in zweckmäßigen Ausführungsformen der Erfindung vorgesehen, dass in dem Fahrzeugzustand Anhalten zum Vergrößern der Bremskraft ein Bremsdruckaufbau in einer Betriebsbremsanlage und/oder eine Aktivierung einer Feststellbremsanlage erfolgen.

Vorzugsweise wird in dem Fahrzeugzustand Halten die Bremskraft aufrechterhalten oder eine vorgegebene Bremskraft eingestellt.

In einer vorteilhaften Ausführungsform der Erfindung wird dabei die im Fahrzeugzustand Halten aufzubauende Bremskraft in Abhängigkeit von einem Längsneigungswinkels des Fahrzeugs bestimmt.

Vorzugsweise ist es ferner vorgesehen, dass im Fahrzeugzustand Anfahren die Bremskraft verringert wird.

In einer vorteilhaften Ausführungsform der Erfindung wird im Fahrzeugzustand Anfahren am Berg die Bremskraft in Abhängigkeit von einem Ergebnis eines Vergleichs zwischen einer Hangabtriebskraft und einer Antriebskraft des Fahrzeugs verringert.

Erfindungsgemäß wird in dem Fahrzeugzustand Parken/Sichern die Feststellbremse aktiviert.

In einer weiteren bevorzugten Ausführungsform der Erfindung ist es vorgesehen, dass wenigstens eine der folgenden Assistenzfunktionen ausgeführt wird: Eine Funktion zum Aktiven Anhalten und Anfahren, eine dynamische Bremsfunktion, eine Funktion zum aktiven Fahrzeughalten, ein Stau-Assistent, eine Funktion zum automatischen Lösen der Feststellbremse bei einem Anfahrvorgang und ein Anfahrassistent.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt

Fig. 1 eine Übersicht über die Fahrzeugzustände, die in einer bevorzugten Ausführungsform der Erfindung unterschieden werden und

Fig. 2 ein Zustandsdiagramm, in dem insbesondere mögliche Übergänge zwischen den in der Figur 1 dargestellten Fahrzeugzuständen dargestellt sind.

Eine bevorzugte Ausführungsform des erfindungsgemäßen Systems zur Fahrerunterstützung wird nachfolgend als Stillstandsmanager (SSM) bezeichnet.

Der SSM steuert die Bremsanlage des Fahrzeugs, die erfindungsgemäß eine Betriebsbremsanlage und eine elektrische Feststellbremse (EFB) umfasst.

Bei der Betriebsbremsanlage des Kraftfahrzeugs handelt es sich beispielsweise um eine hydraulische oder elektrohydraulische Bremsanlage, bei welcher ein Bremsdruck in einer Hydraulikflüssigkeit in einem Hauptbremszylinder aufgebaut und an Radbremszylinder übertragen wird, die an den Rädern des Fahrzeugs angeordnet sind.

Vorzugsweise weist die Betriebsbremsanlage zudem eine durch den SSM steuerbare Energieversorgung auf, mit welcher der Bremsdruck in dem Hauptbremszylinder bzw. in den Radbremszylindern aufgebaut werden kann.

Die Radbremszylinder sind ferner über durch den SSM steuerbare Trennventile mit dem Hauptbremszylinder verbunden, so dass der Bremsdruck in den Radbremszylindern durch ein Sperren der Ventile aufrechterhalten werden kann. Alternativ kann der Bremsdruck auch durch einen aktiven Booster gehalten werden.

Von dem Fahrzeugführer wird die Betriebsbremsanlage mittels eines üblicherweise als Fußpedal ausgeführten Bremsenbetätigungsmittels gesteuert, das mechanisch über einen Bremskraftverstärker mit dem Hauptbremszylinder verbunden oder - im Falle einer elektrohydraulischen Bremsanlage - mit einem Pedalwegsensor ausgerüstet ist, dessen Signale von einem Steuergerät erfasst werden und zur Steuerung einer Hydraulikeinheit dienen. Der Bremsdruck in den Radbremszylinder wird mittels Drucksensoren gemessen.

Die Erfindung ist dabei jedoch nicht auf diese Ausführungsform der Betriebsbremsanlage beschränkt. Der Fachmann erkennt vielmehr, dass sich die Erfindung in analoger Weise auch auf andere Bremsanlagen übertragen lässt.

Die elektrische Feststellbremse (EFB) umfasst beispielsweise Duo-Servo- oder Kombisattel-Radbremsen, die durch Aktuatoren arretiert werden. Die Aktuatoren werden entweder mittels eines Elektromotors über Seilzüge oder mittels einer geeigneten Mechanik oder Hydraulik direkt am Bremssattel angesteuert. Der Fahrzeugführer steuert die EFB vorzugsweise mittels eines Schalters, der innerhalb des Kraftfahrzeugs angeordnet ist.

Ferner verfügt das Kraftfahrzeug über einen beispielsweise als Verbrennungsmotor ausgeführten Antriebsmotor, der ein Motordrehmoment erzeugt, das über den Antriebsstrang des Fahrzeugs an die Antriebsräder übertragen wird. Die Steuerung des Motors durch den Fahrzeugführer erfolgt mittels eines Fahrpedals, das vorzugsweise mit einem Pedalwegsensor ausgerüstet ist.

Der Antriebsstrang enthält insbesondere ein Getriebe, das über eine Kupplung oder - im Falle eines Automatikgetriebes - über einen Drehmomentwandler mit dem Antriebsmotor verbunden ist. Die Kupplung wird von dem Fahrzeugführer über ein Kupplungspedal bedient wird, das vorzugsweise ebenfalls mit einem Pedalwegsensor ausgestattet ist. Darüber hinaus ist das Getriebe oder ein Betätigungsmittel, mit dem die Gänge des Getriebes gewechselt werden, mit einem Sensor zum Erfassen des eingelegten Gangs ausgerüstet.

Zur Ermittlung der Fahrzeuggeschwindigkeit $v$ ist an wenigstens einem Rad des Fahrzeugs ein Raddrehzahlsensor angeordnet. Mit weiteren Sensoren des Kraftfahrzeugs kann beispielsweise ermittelt werden, ob der Fahrersitz belegt und ob die Fahrertür geöffnet oder geschlossen ist.

Um den Fahrzeugführer bei der Handhabung des Fahrzeugs im unteren Geschwindigkeitsbereich, vorzugsweise bei Fahrzeuggeschwindigkeiten v, die kleiner als 4 km/h sind, zu unterstützen, sind mehrere Assistenzfunktionen vorgesehen. In einer vorteilhaften Ausführungsform der Erfindung handelt es sich dabei beispielsweise um folgende Assistenzfunktionen, die nachfolgend näher erläutert werden:

- Eine Funktion zur Unterstützung des Fahrzeugführers beim Anhalten und Anfahren (Stop & Go, S&G), beispielsweise in einem Verkehrsstau.
- Eine dynamische Bremsfunktion (Dynamic Brake Function, DBF), bei der das Abbremsen des Fahrzeugs mittels der Betriebsbremse durch einen zusätzlichen Eingriff der Feststellbremse in Stillstandsnähe unterstützt wird.
- Eine Funktion zum aktiven Fahrzeughalten (Active Vehicle Hold, AVH), die das Fahrzeug gegen ein ungewolltes Anrollen sichert.
- Einen Stau Assistenten (SA), der den Fahrer ebenfalls beim Anhalten und Anfahren in einem Verkehrsstau unterstützt.
- Eine Funktion zum automatischen Lösen der EFB bei einem An fahrvorgang (Drive Away Release, DAR).
- Ein Anfahrassistent (Hill Start Assist, HSA), der ein Zurückrollen des Fahrzeugs bei einem Anfahrvorgang verhindert.

Erfindungsgemäß ist es vorgesehen, dass die vorhandenen Assistenzfunktionen bzw. eine oder mehrere dafür vorgesehene Steuergeräte überprüfen, ob Bedingungen zur Aktivierung bzw. Deaktivierung vorliegen. Die Aktivierung der Funktionen erfolgt dabei dann, wenn ein vorgegebener Fahrzeugzustand vorliegt und/oder wenn ein Betätigungssignal eines von dem Fahrer bedienten Betätigungsmittels vorliegt. Bei dem Betätigungsmittel kann es sich beispielsweise um das Bremsenbetätigungsmittel, das Antriebsmotorsteuerungsmittel, einen Aktivierungsschalter der EFB oder um einen Schalter zur Aktivierung der Assistenzfunktion handeln.

Durch die S&G-Funktion wird das Fahrzeug durch einen Druckaufbau in den Radbremsen abgebremst, wenn der Fahrzeugführer bei kleinen Fahrzeuggeschwindigkeiten v, beispielsweise während einer Kolonnenfahrt in einem Stau, das Fahrpedal löst, d.h. kein Motordrehmoment anfordert. Vorzugsweise wird der Bremsdruck dabei abgebaut, wenn eine vorgegebene Fahrzeuggeschwindigkeit $v$ erreicht ist, die nachfolgend aufrechterhalten wird.

In ähnlicher Weise unterstützt die SA-Funktion den Fahrer, indem das Fahrzeug durch einen Druckaufbau in den Radbremsen bis zum Stillstand abgebremst wird, wenn ein Haltewunsch des Fahrers erkannt wird. Dies geschieht vorzugsweise dadurch, dass beim Vorliegen einer kleinen Fahrzeuggeschwindigkeit $v$ festgestellt wird, dass der Fahrer das Fahrpedal nicht mehr betätigt.

Die S&G-Funktion sowie die SA-Funktion werden dabei in einer Ausführungsform der Erfindung durch den Fahrer mittels eines Schalters aktiviert und deaktiviert. In weiteren Ausführungsformen der Erfindung kann es jedoch auch vorgesehen sein, dass eine der beiden Funktionen selbsttätig aktiviert wird, wenn die Fahrzeuggeschwindigkeit während einer vorgegebenen Zeitspanne in einem vorgegebenen Bereich liegt, und dass die S&G-Funktion deaktiviert wird, wenn eine vorgegebene Fahrzeuggeschwindigkeit überschritten wird, oder wenn ein Stillstand des Fahrzeugs festgestellt wird.

Durch die dynamische Bremsfunktion (DBF) wird das Fahrzeug insbesondere in einer Notfallsituation angehalten. Dabei wird das Fahrzeug zunächst mittels der hydraulischen Betriebsbremse abgebremst, bis eine Fahrzeuggeschwindigkeit $v$ von beispielsweise 4 km/h erreicht ist. Für kleinere Geschwindigkeiten erfolgt ein automatisches Abbremsen mittels der EFB. Die DBF wird mittels eines durch den Fahrzeugführer zu betätigenden Schalters aktiviert und erlaubt damit insbesondere ein Abbremsen des Fahrzeugs, wenn das Bremsenbetätigungsmittel von dem Fahrzeugführer nicht bedient werden kann. Die Funktion wird deaktiviert, wenn ein Stillstand des Fahrzeugs festgestellt wird.

Die AVH-Funktion sichert das Fahrzeug gegen ein ungewolltes Anrollen, indem während des Stillstands ein Bremsdruck in den Radbremsen aufgebaut wird. Die Funktion wird durch den Fahrzeugführer vorzugsweise mittels eines Schalters aktiviert. Eine automatische Aktivierung ist auch denkbar. Falls der Fahrer das Fahrzeug verlässt, was mittels eines Sensors an der Fahrertür vorzugsweise dann erkannt wird, wenn die Fahrertür geöffnet wird, oder falls eine vorgegebene Zeitdauer abgelaufen ist, wird vorzugsweise von der hydraulischen Betriebsbremse auf die EFB umgeschaltet. Die Deaktivierung dieser Funktion geschieht vorzugsweise, wenn ein Anfahrwunsch des Fahrers erkannt wird, oder wenn mittels des Schalters eine Deaktivierung durch den Fahrer vorgenommen wird.

Durch die DAR-Funktion wird die während des Stillstands aktivierte EFB des Fahrzeugs bei einem Anfahrvorgang automatisch gelöst. Die EFB wird dabei insbesondere dann gelöst, wenn ein Anfahrwunsch des Fahrzeugführers festgestellt wird. Die Aktivierung der DAR-Funktion erfolgt dann, wenn ein Stillstand des Fahrzeugs ermittelt wird und die EFB durch den Fahrer aktiviert ist.

In ähnlicher Weise wird der Fahrer beim Anfahren durch die HSA-Funktion unterstützt, indem ein Bremsdruck in den Radbremsen des Fahrzeugs aufgebaut wird, der bei einem erkannten Anfahrwunsch reduziert bzw. zurückgenommen wird. Die Aktivierung der HSA-Funktion geschieht entweder durch den Fahrzeugführer beispielsweise mittels eines entsprechenden Schalters, oder es erfolgt eine selbsttätige Aktivierung, wenn der Fahrzeugführer die Betriebsbremse betätigt und sich das Fahrzeug am Hang befindet. Eine Deaktivierung geschieht vorzugsweise, wenn das Anfahren des Fahrzeugs erkannt worden ist, oder wenn eine Abbruchbedingung erfüllt ist. Als Abbruchbedingung kann dabei beispielsweise eine Aktivierung der EFB, bzw. ein Ziehen einer Handbremse, vorgesehen sein. Ferner wird die Funktion vorzugsweise deaktiviert, wenn mittels eines Sitzbelegungssensors am Fahrersitz nicht festgestellt wird, dass der Fahrersitz belegt ist.

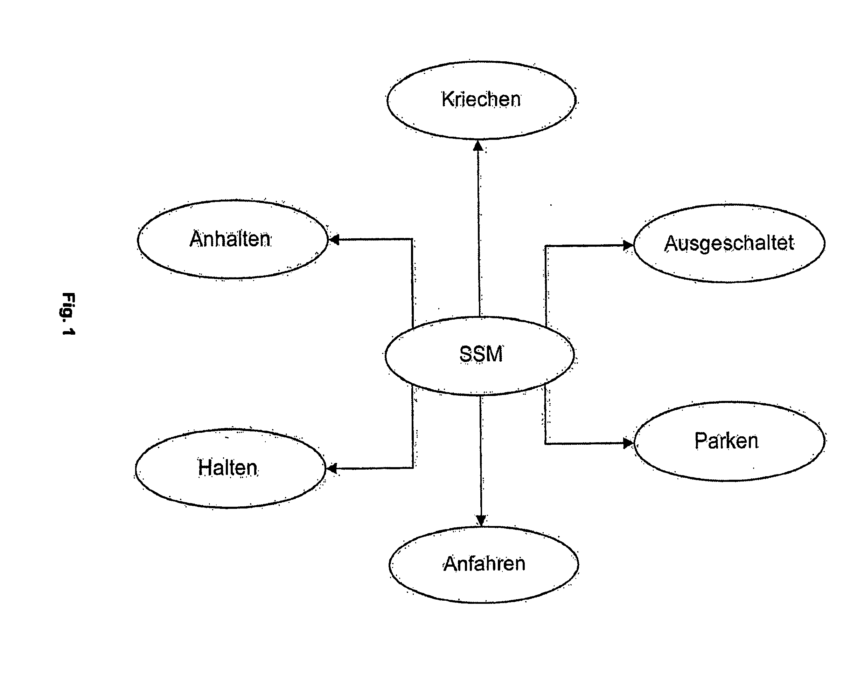

Die Steuerung der Bremsanlage, d.h. die Ausführung der Assistenzfunktionen, wird erfindungsgemäß durch den SSM vorgenommen. In einer vorteilhaften Ausgestaltung der Erfindung ist der SSM dabei als ein Zustandsautomat ausgeführt. Die Fahrzeugzustände, die durch den SSM erkannt werden, sind dabei in der Figur 1 veranschaulicht und umfassen die Zustände Kriechen, Anfahren, Halten, Fahren und Parken/Sichern. Ferner ist ein Zustand Ausgeschaltet vorgesehen, in dem der SSM deaktiviert ist.

Die Aktivierung des SSM erfolgt, wenn die Fahrzeuggeschwindigkeit $v$ einen vorgegebenen Schwellenwert, beispielsweise 4 km/h, unterschreitet. Für Werte der Fahrzeuggeschwindigkeit $v$ oberhalb des vorgegebenen Schwellenwertes ist der SSM deaktiviert, d.h. er befindet sich in dem Zustand Ausgeschaltet. Eine Deaktivierung erfolgt vorzugsweise auch dann, wenn keine der Assistenzfunktionen des Fahrzeugs aktiviert ist. Ferner erfolgt die Deaktivierung vorzugsweise auch dann, wenn ein Fehler festgestellt wird, der beispielsweise in der Bremsanlage oder in von dem SSM verwendeten Fahrzeugsensorik vorliegt.

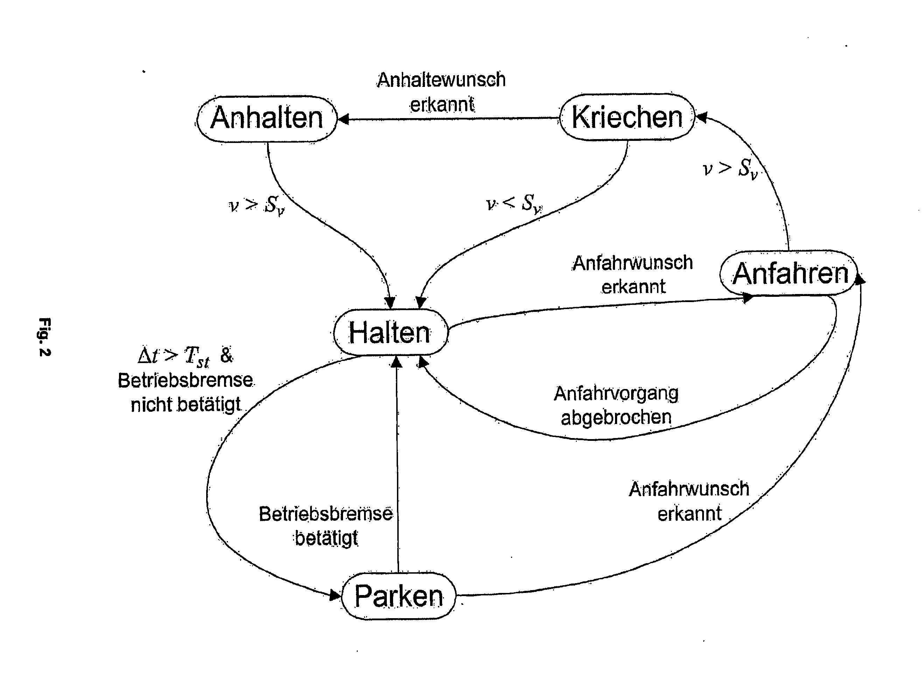

Die Erkennung der übrigen Zustände ergibt sich aus den Bedingungen, unter denen ein Zustandsübergang des SSM erfolgt, der auch als Transition bezeichnet wird. Die möglichen Transitionen sind dabei in der Figur 2 veranschaulicht.

Ausgehend von dem Zustand Anhalten bestehen dabei zwei mögliche Transitionen. Eine Transition in den Zustand Halten erfolgt dann, wenn ein Stillstand des Fahrzeugs festgestellt wird. Aufgrund des in der Regel begrenzten Auflösungsvermögens der in Fahrzeugen eingesetzten Geschwindigkeits- bzw. Raddrehzahlsensoren wird der Stillstand dabei in der Praxis vorzugsweise dann festgestellt, wenn die Fahrzeuggeschwindigkeit v einen vorgegebenen Schwellenwert $S_{v1}$, beispielsweise 1 km/h, unterschreitet. Die Transition in den Zustand Ausgeschaltet geschieht, wenn keine der Assistenzfunktionen aktiviert ist oder wenn der SSM aufgrund eines Fehlers deaktiviert wird.

Ausgehend von dem Zustand Halten bestehen in einer bevorzugten Ausführungsform der Erfindung drei mögliche Transitionen. Eine Transition in den Zustand Anfahren erfolgt dabei, wenn ein Anfahrwunsch des Fahrzeugführers erkannt wird. In einer vorteilhaften Ausführungsform der Erfindung geschieht dies beispielsweise, wenn das Fahrpedal während einer vorgegebenen Zeitdauer von beispielsweise ca. 100 ms betätigt worden ist oder wenn das Fahrpedal wenigstens um einen vorgegebenen Pedalweg von beispielsweise 3% des maximalen Pedalwegs betätigt wurde. Die Betätigung des Fahrpedals wird dabei mittels des Pedalwegsensors am Fahrpedal ermittelt.

Es kann ebenfalls vorgesehen sein, anstelle der Überwachung des Fahrpedals oder zusätzlich dazu zu überprüfen, ob ein Motordrehmoment vorliegt, das ausreichend groß ist, um ein Anfahren des Fahrzeugs zu ermöglichen und/oder ob die Kupplung geschlossen wird. Der Kupplungszustand kann dabei beispielsweise mittels eines Pedalwegsensors an dem Kupplungspedal bestimmt werden, der Wert des Motordrehmoments des Antriebsmotors wird in der Regel durch das Steuergerät des Motors zur Verfügung gestellt.

Weitere Bedingungen für den Übergang in den Zustand Anfahren sind dann erfüllt, wenn ein Gang in dem Fahrzeuggetriebe eingelegt ist, was mit einem Sensor am Getriebe bzw. an der Schaltvorrichtung des Fahrzeugs festgestellt wird, und wenn das Betätigungsmittel der Betriebsbremse von dem Fahrzeugführer nicht betätigt wird.

Bei einem weiteren Verfahren, das hier genutzt werden kann, wird das Einkuppeln erkannt, wenn das Antriebsmoment in einem vorgegebenen Bereich liegt, d.h. insbesondere größer als ein vorgegebener Schwellenwert ist, und die Änderungsrate der Motordrehzahl einen vorgegebenen Schwellenwert unterschreitet. Dieses Verfahren hat den Vorteil, dass zur Erkennung des Einkuppelns, bzw. Anfahrens ausschließlich Signale verwendet werden, die durch die Motorsteuerung bereitgestellt werden, und nicht auf zusätzliche Sensoren zurückgegriffen werden muss. Darüber hinaus sind ebenfalls einsetzbare Verfahren zum Ermitteln eines Anfahrens bzw. Einkuppelns beispielsweise in der deutschen Offenlegungsschrift DE 100 63 061 A1 beschrieben.

Ein Übergang von dem Zustand Halten in den Zustand Parken/Sichern erfolgt vorzugsweise dann, wenn die Zeitdauer $\Delta t_{st}$, während der sich das Fahrzeug im Stillstand befindet, einen vorgegebenen Schwellenwert $T_{st}$ überschreitet, und wenn der Fahrzeugführer das Betätigungsmittel der Betriebsbremse nicht betätigt. Ferner kann der Übergang in den Zustand Halten dann erfolgen, wenn der Fahrzeugführer das Fahrzeug verlässt, wobei das Verlassen des Fahrzeugs, wie oben beschrieben, mittels eines Sensors an der Fahrertür festgestellt wird, wenn die Fahrertür geöffnet wird.

Ein Übergang in den Zustand Ausgeschaltet erfolgt aufgrund der oben bereits beschriebenen Bedingungen.

Ausgehend von dem Zustand Anfahren sind vorzugsweise drei mögliche Transitionen des SSM vorgesehen. Falls der Anfahrvorgang abgebrochen wird, was vorzugsweise mittels des Fahrpedalsensors daran festgestellt wird, dass der Fahrzeugführer das Fahrpedal löst bzw. nicht mehr betätigt, erfolgt ein Übergang in den Zustand Halten. Ein Übergang in den Zustand Kriechen geschieht, wenn die Fahrzeuggeschwindigkeit $v$ einen Schwellenwert überschreitet, der vorzugsweise dem Schwellenwert $S_v$ entspricht.

Ferner kann ein Übergang in den Zustand Ausgeschaltet vorliegen, wenn eine der diesbezüglich bereits beschriebenen Bedingungen vorliegt.

Ausgehend von dem Zustand Kriechen bestehen vorzugsweise ebenfalls drei mögliche Transitionen. Neben der Transition in den Zustand Ausgeschaltet, die beim Vorliegen der bereits genannten Bedingungen erfolgt, ist dabei insbesondere eine Transition in den Zustand Anhalten vorgesehen, wenn ein Anhaltewunsch des Fahrers festgestellt wird, was beispielsweise der Fall sein kann, wenn mittels des Fahrpedalsensors ermittelt wird, dass der Fahrer das Fahrpedal vollständig gelöst hat.

Ferner erfolgt ein Übergang in den Zustand Halten, wenn die Fahrzeuggeschwindigkeit $v$ den Schwellenwert $S_v$ unterschreitet.

Ausgehend von dem Zustand Parken/Sichern, in den der SSM von dem Zustand Halten aus übergehen kann, sind in einer vorteilhaften Ausführungsform der Erfindung drei mögliche Transitionen vorgesehen. Eine Transition in den Zustand Anfahren erfolgt dabei, wenn die Bedingungen erfüllt sind, die auch zu einem Übergang des SSM von dem Zustand Halten in den Zustand Anfahren führen. Ferner kann ein Übergang von dem Zustand Parken in den Zustand Halten vorgesehen sein, der beispielsweise dann erfolgt, wenn der Fahrzeugführer das Betätigungsmittel der Betriebsbremse betätigt. In weiteren Ausführungsformen der Erfindung kann es ebenfalls vorgesehen sein, dass eine Transition in den Zustand Halten erfolgt, wenn mittels des Sitzbelegungssensors ermittelt wird, dass der Fahrzeugführer nach einer Abwesenheit wieder auf dem Fahrersitz Platz nimmt. Bei Vorliegen der diesbezüglich bereits beschriebenen Bedingungen ist ferner ein Übergang in den Zustand Ausgeschaltet vorgesehen.

In jedem Zustand des SSM, der einem entsprechenden Zustand des Fahrzeugs entspricht, ermittelt der SSM die aktivierten Assistenzfunktionen. Die Steuerung der Bremsanlage erfolgt durch den SSM in Abhängigkeit von der Assistenzfunktion bzw. den Assistenzfunktionen die aktiviert sind.

Im Zustand Anhalten können sowohl die SA-Funktion als auch die DBF aktiviert sein. Da die SA-Funktion ein komfortables Abbremsen des Fahrzeugs in den Stillstand bewirkt, und die DBF in einer Notfallsituation ein rasches Abbremsen des Fahrzeugs bewirken soll, erfolgt die Steuerung des Bremssystems durch den SSM in Abhängigkeit von der in dem Zustand aktivierten Funktion.

Falls die DBF aktiviert ist, während sich der SSM im Zustand Anhalten befindet, erfolgt ein Druckaufbau in der hydraulischen Betriebsbremse, der vorzugsweise mit einem großen Druckaufbaugradienten von beispielsweise ca. 100 bar/s erfolgt. In einer möglichen Ausführungsform der Erfindung kann zusätzlich auch die EFB aktiviert werden. Hierdurch wird der Bremsweg des Fahrzeugs weiter verkürzt.

Falls die SA-Funktion aktiviert ist, während sich der SSM im Zustand Anhalten befindet, erfolgt der Druckaufbau in der hydraulischen Betriebsbremse mit einem kleinen Druckaufbaugradienten von beispielsweise ca. 30 bar/s. Hierdurch wird ein komfortables Abbremsen des Fahrzeugs gewährleistet, bei dem insbesondere ein Einnicken des Fahrzeugs beim Anhalten vermieden werden kann.

Da auch beide der vorgenannten Assistenzfunktionen aktiviert sein können, ist es vorgesehen, eine übergeordnete Arbitrierungseinheit in das System zu integrieren, die ermittelt, welche Anforderung von dem SSM umgesetzt wird, d.h. in Abhängigkeit von welcher der Assistenzfunktionen die Steuerung der Bremsanlage erfolgt. Vorzugsweise ist es vorgesehen, dass die Anforderungen der DBF Priorität gegenüber den Anforderungen der SA-Funktion haben, so dass eine rasche Verzögerung des Fahrzeugs sichergestellt wird, wenn die DBF aktiv ist.

Bei einem Übergang des SSM in den Zustand Halten wird zunächst ein gegebenenfalls vorhandener Druckaufbaugradient bis auf den Wert Null verringert, so dass ein Einnicken des Fahrzeugs beim Übergang in den Stillstand vermieden wird. Ferner wird die EFB gelöst, falls sie in einem vorherigen Zustand aktiviert worden ist.

Nach der Reduzierung von einem möglicherweise vorliegenden Druckaufbaugradienten auf den Wert Null und dem Lösen der EFB ist es in einer Ausführungsform der Erfindung vorgesehen, den in der Betriebsbremse vorhandenen Bremsdruck aufrechtzuerhalten. Dies geschieht durch ein Sperren der Trennventile zwischen dem Hauptbremszylinder und den Radbremszylindern. Ferner wird der Stillstand des Fahrzeugs mit Hilfe der Messsignale der Raddrehzahlsensoren überwacht. Wird dabei ein Anrollen des Fahrzeugs festgestellt, wird der Bremsdruck in der Betriebsbremse durch eine Ansteuerung der Energieversorgung der Bremsanlage um einen vorgegebenen Betrag erhöht.

In einer weiteren Ausführungsform der Erfindung kann es vorgesehen sein, den Bremsdruck in der Betriebsbremse in dem Zustand Halten so lange zu reduzieren, bis ein Anrollen des Fahrzeugs festgestellt wird, und dann eine Erhöhung des Bremsdrucks um einen vorgegebenen Betrag vorzunehmen. Hierdurch wird verhindert, dass während des Stillstands kein zu großer Bremsdruck in den Radbremsen vorliegt, der den Vortrieb des Fahrzeugs bei einem nachfolgenden Anfahrvorgang beeinträchtigen würde.

Ferner kann es auch vorgesehen sein, dass der im Zustand Halten von dem SSM eingestellte Bremsdruck anhand des Fahrzeuglängsneigungswinkels berechnet wird, der mit einem Neigungswinkelsensor oder mit einem Längsbeschleunigungssensor ermittelt wird. Dieser misst die Summe aus der Änderungsrate der Fahrzeuggeschwindigkeit $v$ und der Hangabtriebsbeschleunigung, so dass bei bekannter Änderungsrate der Fahrzeuggeschwindigkeit $v$, die beispielsweise anhand der Messsignale der Raddrehzahlsensoren ermittelt werden kann, die Hangabtriebsbeschleunigung und daraus der Steigungswinkel bzw. der Längsneigungswinkel des Fahrzeugs bestimmt werden kann. Während des Fahrzeugstillstands gilt dabei insbesondere

$$\sin(\alpha) = -a_{Sensor}/g$$

wobei $\alpha$ den Längsneigungswinkel des Fahrzeugs, $a_{Sensor}$ das Signal des Längsbeschleunigungssensors und $g$ die Erdbeschleunigung bezeichnet. Das Vorzeichen ist dabei so gewählt, dass sich ein positiver Winkel $\alpha$ ergibt, wenn das Fahrzeug in Bergaufrichtung steht, und dass sich ein negativer Winkel $\alpha$ ergibt, wenn das Fahrzeug in Bergabrichtung steht.

Befindet sich der SSM im Zustand Anfahren, während wenigstens eine der verfügbaren Assistenzfunktionen aktiviert ist, wird der Bremsdruck in der hydraulischen Betriebsbremse mit einem vorgegebenen Bremsdruckgradienten reduziert, und die EFB wird, falls sie aktiviert ist, zunächst teilgelöst und dann vollständig gelöst.

In einer vorteilhaften Ausführungsform der Erfindung ist es dabei vorgesehen, dass der SSM den Bremsdruckgradienten für den Bremsdruckabbau in Abhängigkeit von dem Längsneigungswinkel des Fahrzeugs und der Anfahrrichtung bestimmt, die anhand des eingelegten Gangs ermittelt werden kann. Vorzugsweise wird dabei bei einem Anfahren in eine Bergabrichtung ein höherer Bremsdruckgradient eingestellt als bei einem Anfahren in der Ebene.

Bei einem Anfahren in eine Bergaufrichtung wird der Bremsdruck in der Betriebsbremse in einer vorteilhaften Ausführungsform der Erfindung in dem Maße reduziert, in dem das von dem Antriebsmotor des Fahrzeugs zur Verfügung gestellte Antriebsmoment ansteigt. Dabei werden in einer Kräftebilanz die Hangabtriebskraft und die sich durch das von dem Antriebsmotor bereitgestellte Motordrehmoment ergebende Antriebskraft verglichen. Der von dem SSM eingestellte Bremsdruck wird dann so berechnet, dass die Bremskraft die Differenz zwischen der Hangabtriebskraft und der Antriebskraft ausgleicht. Falls die Antriebskraft genauso groß wie die Hangabtriebskraft oder größer als diese ist, wird der Bremsdruck in der Betriebsbremse auf den Wert Null reduziert.

Nach einer Transition des SSM in den Zustand Parken/Sichern erfolgt eine Aktivierung der EFB. Dabei wird das maximale Bremsmoment der EFB eingestellt, so dass der Stillstand des Fahrzeugs auch bei einer Veränderung der Steigung während des Stillstands, wie sie beispielsweise in Duplex-Garagen erfolgen kann, sichergestellt ist.

Der Zustand Kriechen, in dem nur die S&G-Funktion aktiv sein kann, ist ein passiver Zustand des SSM, d.h. es werden hier keine Brernskraftanforderungen bestimmt. Der Zustand ermöglicht es damit auch in dem unteren Geschwindigkeitsbereich, in dem der SSM aktiviert ist, dass der Fahrzeugführer das Fahrzeug und insbesondere die Bremsanlage eigenständig, d.h. ohne die Unterstützung eines Assistenzsystems steuert. Die Bremskraftanforderungen und die Antriebsmomentanforderungen werden in dem Zustand Kriechen somit ausschließlich durch den Fahrer gesteuert.

Im Zustand Ausgeschaltet überprüft der SSM, ob ein Bremsdruck in der Betriebsbremse des Fahrzeugs vorliegt. Ist dies der Fall, so erfolgt ein Druckabbau mit einem vorgegebenen Bremsdruckgradienten.

**Patentansprüche**

1. System zum Unterstützen eines Fahrzeugführers, bei dem in einem Kraftfahrzeug Assistenzfunktionen zur Unterstützung des Fahrers bei Anhalte- und Anfahrvorgängen durchgeführt werden, die in Abhängigkeit eines ersten Vergleichs zwischen wenigstens einer Fahrzustandsgröße und einem Schwellenwert und/oder aufgrund von ersten Betätigungssignalen von durch den Fahrer bedienbaren Betätigungsmitteln aktiviert werden, wobei eine Steuerungseinheit (SSM) einen Fahrzeugzustand in Abhängigkeit eines Vergleichs der Fahrzeuggeschwindigkeit (v) und/oder der Fahrzeugbeschleunigung mit einem Schwellenwert ($S_v$) ermittelt, wobei die Steuerungseinheit überprüft, ob wenigstens eine Assistenzfunktion (S&G, DBF, AVH, SA, DAR, HSA) aktiviert ist, und wobei die Steuerungseinheit die Bremsanlage des Fahrzeugs in Abhängigkeit von dem ermittelten Fahrzeugzustand steuert, wenn wenigstens eine Assistenzfunktion (S&G, DBF, AVH, SA, DAR, HSA) aktiviert ist, **dadurch gekennzeichnet,** **dass** die Bremsanlage des Fahrzeugs eine Betriebsbremsanlage und eine elektrische Feststellbremse (EFB) umfasst, und dass die Steuerungseinheit als ein Zustandsautomat ausgebildet ist, wobei ein Fahrzeugzustand erkannt wird, indem in einem weiteren Fahrzeugzustand überprüft wird, ob eine Übergangsbedingung für einen Zustandsübergang vorliegt, und ein Zustandsübergang erfolgt, wenn die Übergangsbedingung erfüllt ist, was anhand des Vergleichs der Fahrzeuggeschwindigkeit ( v) und/oder der Fahrzeugbeschleunigung mit einem vorgegebenen Schwellenwert ($S_v$) und gegebenenfalls anhand weiterer Betätigungssignale der Betätigungsmittel festgestellt wird, wobei genau ein Fahrzeugzustand erkannt wird, der aus einem der folgenden Fahrzeugzustände ausgewählt ist: Kriechen, Anhalten, Halten, Parken, Anfahren, und wobei in dem Fahrzeugzustand Parken die elektrische Feststellbremse (EFB) aktiviert wird.

2. System nach Anspruch 1,
**dadurch gekennzeichnet,**
**dass** der Fahrzeugzustand in Abhängigkeit eines Betätigungssignals eines durch den Fahrer bedienbaren Bremsbetätigungsmittels und/oder eines Antriebsmotorsteuerungsmittels ermittelt wird.

3. System nach einem der vorangegangenen Ansprüche,
**dadurch gekennzeichnet,**
**dass** die Aktivierung einer Assistenzfunktion (S&G, DBF, AVH, SA, DAR, HSA) in Abhängigkeit eines Betätigungssignals eines durch den Fahrzeugführer bedienbaren Bremsenbetätigungsmittels und/oder eines Antriebsmotorsteuerungsmittels oder in Abhängigkeit eines Betätigungssignals eines durch den Fahrer bedienbaren Aktivierungsmittels erfolgt.

4. System nach einem der vorangegangenen Ansprüche,
**dadurch gekennzeichnet,**
**dass** im Fahrzeugzustand Anhalten die Bremskraft vergrößert wird, wobei die Änderungsrate der Bremskraft in Abhängigkeit von der aktivierten Assistenzfunktion (S&G, DBF, AVH, SA, DAR, HSA) ermittelt wird.

5. System nach einem der vorangegangenen Ansprüche,
**dadurch gekennzeichnet,**
**dass** in dem Fahrzeugzustand Anhalten zum Vergrößern der Bremskraft ein Bremsdruckaufbau in der Betriebsbremsanlage und/oder eine Aktivierung einer Feststellbremsanlage (EFB) erfolgen.

6. System nach einem der vorangegangenen Ansprüche,
**dadurch gekennzeichnet,**
**dass** in dem Fahrzeugzustand Halten eine Bremskraft aufrechterhalten oder ein vorgegebenes Bremsmoment aufgebaut wird.

7. System nach einem der vorangegangenen Ansprüche,
**dadurch gekennzeichnet,**
**dass** die im Fahrzeugzustand Halten aufzubauende Bremskraft in Abhängigkeit von einem Längsneigungswinkels des Fahrzeugs bestimmt wird.

8. System nach einem der vorangegangenen Ansprüche,

**dadurch gekennzeichnet,**

**dass** im Fahrzeugzustand Anfahren die Bremskraft verringert wird.

9. System nach einem der vorangegangenen Ansprüche,

**dadurch gekennzeichnet,**

**dass** im Fahrzeugzustand Anfahren die Bremskraft in Abhängigkeit von einem Ergebnis eines Vergleichs zwischen einer Hangabtriebskraft und einer Antriebskraft des Fahrzeugs verringert wird.

10. System nach einem der vorangegangenen Ansprüche,

**dadurch gekennzeichnet,**

**dass** wenigstens eine der folgenden Assistenzfunktionen ausgeführt wird: Eine Funktion zum Aktiven Anhalten und Anfahren (S&G), eine dynamische Bremsfunktion (DBF), eine Funktion zum aktiven Fahrzeughalten (AVH), ein Stau-Assistent (SA), eine Funktion zum automatischen Lösen der elektrischen Feststellbremse (EFB) bei einem Anfahrvorgang (DAR) und ein Anfahrassistent (HSA).

**Claims**

1. A system for providing vehicle driver support, in which system assistance functions for supporting the driver during stopping and starting processes are carried out in a motor vehicle, said assistance functions being activated as a function of a first comparison between at least one driving state variable and a threshold value and/or on the basis of first actuation signals of actuation means which can be operated by the driver, wherein a control unit (SSM) determines a vehicle state as a function of a comparison of the vehicle speed ($v$) and/or the vehicle acceleration with a threshold value ($S_v$), wherein the control unit checks whether at least one assistance function (S&G, DBF, AVH, SA, DAR, HSA), is activated, and wherein the control unit controls the brake system of the vehicle as a function of the determined vehicle state if at least one assistance function (S&G, DBF, AVH, SA, DAR, HSA) is activated,

**characterized**

**in that** the brake system of the vehicle comprises a service brake system and an electric parking brake (EFB), and in that the control unit is embodied as a state machine, wherein a vehicle state is detected be checking in a further vehicle state whether a transition condition is present for a state transition, and a state transition takes place if the transition condition is met, which is detected on the basis of the comparison of the vehicle speed ($v$) and/or the vehicle acceleration with a predefined threshold value ($S_v$) and, if appropriate, on the basis of further actuation signals of the actuation means, wherein precisely one vehicle state is detected which is selected from one of the following vehicle states: creeping, stopping, arresting, parking, starting, and wherein the electric parking brake (EFB) is actuated in the parking vehicle state.

2. System according to Claim 1,

**characterized**

**in that** the vehicle state is determined as a function of an actuation signal of a brake actuation means and/or drive engine control means which can be operated by the driver.

3. System according to one of the preceding claims,

**characterized**

**in that** the actuation of an assistance function (S&G, DBF, AVH, SA, DAR, HSA) takes place as a function of an actuation signal of a brake actuation means and/or drive engine control means which can be operated by the vehicle driver or as a function of an actuation signal of an activation means which can be operated by the driver.

4. System according to one of the preceding claims,

**characterized**

**in that** the braking force is increased in the stopping vehicle state, wherein the rate of change of the braking force is determined in accordance with the activated assistance function (S&G, DBF, AVH, SA, DAR, HSA).

5. System according to one of the preceding claims,

**characterized**

**in that** in the stopping vehicle state an increase in brake pressure takes place in the service brake system and/or a parking brake system (EFB) is actuated in order to increase the braking force.

6. System according to one of the preceding claims,

**characterized**

**in that** in the arresting vehicle state a braking force is maintained or a predefined braking torque is established.

7. System according to one of the preceding claims,

**characterized**

**in that** the braking force which is to be established in the arresting vehicle state is determined as a function of a longitudinal inclination angle of the vehicle.

8. System according to one of the preceding claims,

**characterized**

**in that** in the starting vehicle state the braking force is reduced.

9. System according to one of the preceding claims,

**characterized**

**in that** in the starting vehicle state the braking force is reduced in accordance with a result of a comparison of a downgrade force and a drive force of the vehicle.

10. System according to one of the preceding claims, **characterized**
    **in that** at least one of the following assistance functions is carried out: a function for actuating stop and go (S&G), a dynamic braking function (DBF), a function for actively arresting the vehicle (AVH), a traffic jam assistant (SA), a function for automatically releasing the electric parking brake (EFB) during a starting process (DAR) and a starting assistant (HSA).

## Revendications

1. Système d'assistance au conducteur d'un véhicule, avec lequel des fonctions d'assistance sont exécutées dans un véhicule automobile en vue d'assister le conducteur lors des manoeuvres d'arrêt et de démarrage, lesquelles sont activées en fonction d'une première comparaison entre au moins une grandeur d'état de conduite et une valeur de seuil et/ou sur la base de premiers signaux d'actionnement de moyens d'actionnement pouvant être commandés par le conducteur, une unité de commande (SSM) déterminant un état du véhicule en fonction d'une comparaison de la vitesse du véhicule (v) et/ou de l'accélération du véhicule avec une valeur de seuil ($S_v$), l'unité de commande vérifiant si au moins une fonction d'assistance (S&G, DBF, AVH, SA, DAR, HSA) est activée, et l'unité de commande commandant le système de freinage du véhicule en fonction de l'état déterminé du véhicule lorsqu'au moins une fonction d'assistance (S&G, DBF, AVH, SA, DAR, HSA) est activée,
   **caractérisé en ce que**
   le système de freinage du véhicule comprend un système de freinage de service et un frein d'immobilisation électrique (EFB), et **en ce que** l'unité de commande est réalisée sous la forme d'un automate d'état, un état du véhicule étant reconnu en effectuant un contrôle dans un autre état du véhicule afin de vérifier s'il y a présence d'une condition de transition pour une transition d'état, et une transition d'état ayant lieu lorsque la condition de transition est remplie, ce qui est constaté au moyen de la comparaison de la vitesse du véhicule (v) et/ou de l'accélération du véhicule avec une valeur de seuil ($S_v$) prédéfinie et, le cas échéant, de signaux d'actionnement supplémentaires des moyens d'actionnement, exactement un état du véhicule étant reconnu, lequel est sélectionné parmi les états de véhicule suivants : Marche lente, Mise à l'arrêt, Arrêt, Stationnement, Démarrage, et le frein d'immobilisation électrique (EFB) étant activé dans l'état du véhicule Stationnement.

2. Système selon la revendication 1, **caractérisé en ce que** l'état du véhicule est déterminé en fonction d'un signal d'actionnement d'un moyen d'actionnement des freins pouvant être commandé par le conducteur et/ou d'un moyen de commande du moteur de propulsion.

3. Système selon l'une des revendications précédentes, **caractérisé en ce que** l'activation d'une fonction d'assistance (S&G, DBF, AVH, SA, DAR, HSA) s'effectue en fonction d'un signal d'actionnement d'un moyen d'actionnement des freins pouvant être commandé par le conducteur du véhicule et/ou d'un moyen de commande du moteur de propulsion ou en fonction d'un signal d'actionnement d'un moyen d'activation pouvant être commandé par le conducteur.

4. Système selon l'une des revendications précédentes, **caractérisé en ce que** dans l'état de véhicule Mise à l'arrêt, la force de freinage est augmentée, le taux de variation de la force de freinage étant déterminé en fonction de la fonction d'assistance (S&G, DBF, AVH, SA, DAR, HSA) activée.

5. Système selon l'une des revendications précédentes, **caractérisé en ce que** dans l'état de véhicule Mise à l'arrêt, en vue d'augmenter la force de freinage, il se produit un établissement de la pression de freinage dans le système de freinage de service et/ou une activation d'un système de freinage d'immobilisation (EFB).

6. Système selon l'une des revendications précédentes, **caractérisé en ce que** dans l'état de véhicule Arrêt, une force de freinage est maintenue ou un moment de freinage prédéfini est établi.

7. Système selon l'une des revendications précédentes, **caractérisé en ce que** la force de freinage à établir dans l'état de véhicule Arrêt est définie en fonction d'un angle de pente longitudinale du véhicule.

8. Système selon l'une des revendications précédentes, **caractérisé en ce que** dans l'état de véhicule Démarrage, la force de freinage est réduite.

9. Système selon l'une des revendications précédentes, **caractérisé en ce que** dans l'état de véhicule Démarrage, la force de freinage est réduite en fonction d'un résultat d'une comparaison entre une force descensionnelle et une force d'entraînement du véhicule.

**10.** Système selon l'une des revendications précédentes, **caractérisé en ce qu'**au moins l'une des fonctions d'assistance suivantes est exécutée : une fonction de mise à l'arrêt et de démarrage actifs (S&G), une fonction de freinage dynamique (DBF), une fonction d'arrêt actif du véhicule (AVH), un assistant aux embouteillages (SA), un fonction de desserrage automatique du frein d'immobilisation électrique (EFB) lors d'une opération de démarrage (DAR) et un assistant au démarrage (HSA).

**Fig. 1**

**Fig. 2**

**IN DER BESCHREIBUNG AUFGEFÜHRTE DOKUMENTE**

**In der Beschreibung aufgeführte Patentdokumente**

- DE 19525552 A1

- DE 10063061 A1